# EUROPÄISCHE PATENTANMELDUNG

(11) **EP 1 318 614 A1**
(43) Veröffentlichungstag der Anmeldung: **11.06.2003**
(21) Anmeldenummer: 01128922.0
(22) Anmeldetag: 05.12.2001
(51) Int. Cl.: H04B 3/36, H04L 5/14, H04L 25/24

(54) **Verstärker für Vor- und Rückwegsignale**

(71) Anmelder: General Instrument Corporation, Horsham, Pennsylvania 19044 (US)
(72) Erfinder: Schmidt, Rainer, 39446 Löderburg (DE); Widera, Günter, 31135 Hildesheim (DE); Stascheit, Bernhard, 38118 Braunschweig (DE)
(74) Vertreter: Bohnenberger, Johannes, Dr.

(57) **Zusammenfassung**

Die Erfindung betrifft einen Verstärker, insbesondere für ein Kabelnetzwerk, für Vor- und Rückwegsignale, die in verschiedenen Frequenzbändern übertragen werden, umfassend
- einen ersten und zweiten Anschluß (10, 20),
- ein gemeinsames Verstärkerelement (16) für Vor- und Rückwegsignale,
- ein erstes und zweites Vorwegsignal-Filter (18, 28),
- ein erstes und zweites Rückwegsignal-Filter (14, 22). Ein Eingang des Verstärkerelements (16) ist mit einem Ausgang des ersten Vorwegsignal-Filters (28) und mit einem Ausgang des ersten Rückwegsignal-Filters (22),
ein Ausgang des Verstärkerelements (16) mit einem Eingang des zweiten Vorwegsignal-Filters (18) und einem Eingang des zweiten Rückwegsignal-Filters (14),
der erste Anschluß (10) mit dem Ausgang des zweiten Rückwegsignal-Filters (14) und dem Eingang des ersten Vorwegsignal-Filters (28), und
der zweite Anschluß (20) mit dem Ausgang des zweiten Vorwegsignal-Filters (18) und dem Eingang des ersten Rückwegsignal-Filters (22) verschaltet.

## Beschreibung

Die Erfindung betrifft einen Verstärker gemäß Anspruch 1.

Verstärker für Vor- und Rückwegsignale werden insbesondere in Kabelnetzwerken eingesetzt. Hierbei ist ein Vorwegkanal als Frequenzband ausgebildet, in dem die Vorwegsignale von einem zentralen Verteilerknoten an eine Vielzahl von Empfängern, beispielsweise Set-Top-Boxen, übertragen werden. Um Signale von einem Empfänger zurück zu einem Verteilerknoten zu übertragen, ist ein Rückwegkanal vorgesehen, der durch ein Frequenzband gebildet wird, das sich von dem Frequenzband des Vorwegkanals unterscheidet. Somit können in verschiedenen Frequenzbändern Signale in unterschiedliche Richtungen über beispielsweise ein Koaxialkabel oder auch einen Lichtwellenleiter in einem Kabel- bzw. optischen Netzwerk übertragen werden.

Im folgenden wird der Einfachheit halber nur noch von Kabelnetzwerk oder Kabelsystem gesprochen. Allerdings ist dies nicht einschränkend zu verstehen. Ebenso kann die Technologie prinzipiell auch vorteilhaft für optische Netzwerke verwendet werden.

In einem Kabelnetzwerk dient der Rückwegkanal in der Regel zur Übertragung von Steuerinformationen von beispielsweise ten. Dort können die Steuerinformationen ausgewertet werden. Besondere Bedeutung gewinnt der Rückwegkanal für sogenannte Kabelmodems. Diese nutzen den Vorwegkanal zum Download und den Rückwegkanal zum Upload von Daten.

In Deutschland existieren im Kabelnetzwerk derzeit zwei unterschiedliche Frequenzbereichsaufteilungen für die Übertragung von Vor- und Rückwegsignalen. Die erste Aufteilung nutzt das Frequenzspektrum von 5-30 MHz als Rückweg bzw. Rückbereich und 47-862 MHz als Vorweg bzw. Vorwärtsbereich. Für den Vorweg steht damit deutlich mehr Bandbreite als für den Rückweg zur Verfügung. Die Vorwegbandbreite dient vor allem für die Übertragung von Nachrichtensignalen. Bei einer zweiten Aufteilung in Deutschland liegt der Rückweg im Bereich von 5-65 MHz und der Vorweg im Bereich von 85-862 MHz. D.h. die Bandbreite des Vorwegs ist etwas geringer und die Bandbreite des Rückwegs etwas größer als bei der ersten Aufteilung.

Diese Aufteilungen des zur Signalübertragung zur Verfügung stehenden Frequenzspektrums sind in der Regel länder- und normenspezifisch. In den USA existieren daher andere Aufteilungen des Frequenzspektrums in Kabelnetzwerken als in Deutschland.

Die eingangs genannten Verstärker für Kabelnetzwerke sind üblicherweise an eine bestimmte Frequenzaufteilung angepaßt. Das ist nachteilig, da für den Einsatz in unterschiedlichen Kabelnetzwerken in verschiedenen Ländern auch entsprechend angepaßte Verstärker angeboten werden müssen. Zudem sind derartige Verstärker kostenintensiv, da sie sowohl für den Vorweg als auch für den Rückweg separate Komponenten wie Filter und Verstärkerelemente beinhalten. Ein wesentlicher Nachteil besteht zudem darin, dass die Bandbreite des Rückweges sehr viel kleiner als die des Vorweges und dies nicht ohne weiteres änderbar ist. Eine Veränderung der Bandbreite für die einzelnen Übertragungsbereiche ist mit einem erheblichen technischen Aufwand, insbesondere einem Auswechseln frequenzbestimmender Komponenten, verbunden.

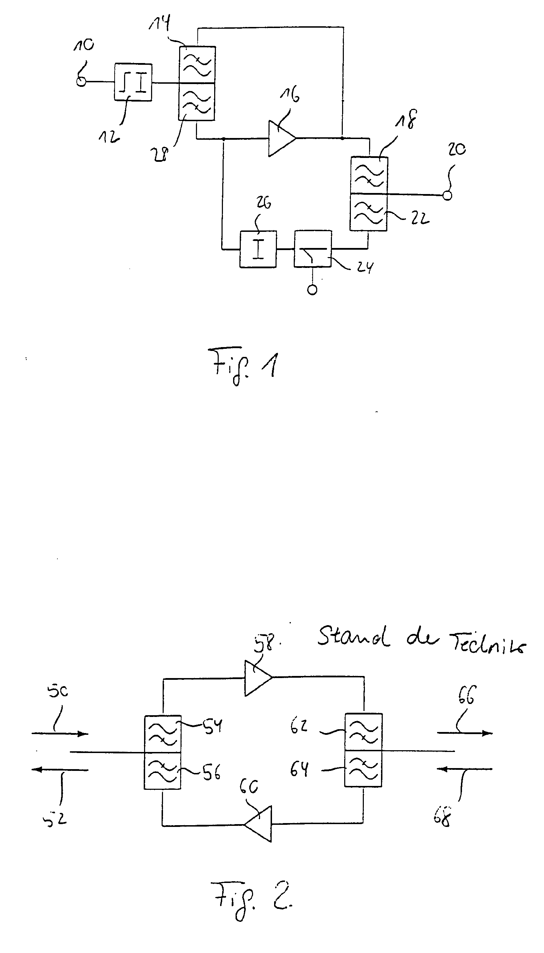

Fig. 2 zeigt ein Ausführungsbeispiel eines bekannten Verstärkers für ein Kabelnetzwerk. Er umfasst zwei nahezu vollständig getrennte Signalpfade für Vor- und Rückwegsignale. Vorwegeingangssignale 50 werden über ein erstes Hochpaßfilter 54 einem Vorweg-Verstärkerelement 58 zugeführt. Dessen Ausgangssignale werden wiederum über ein zweites Hochpaßfilter 62 geführt und als Vorwegausgangssignale 66 des Verstärkers weitergeleitet, beispielsweise an einen Empfänger wie eine Set-Top-Box im Kabelnetzwerk. Umgekehrt gelangen Rückwegeingangssignale 68 von beispielsweise einer Set-Top-Box an einen ersten Tiefpaßfilter 64, und werden an ein darauf folgendes Rückweg-Verstärkerelement 60 geführt. Mit dessen Ausgang ist ein zweites Tiefpaßfilter 56 verschaltet, das die verstärkten Signale als Rückwegausgangssignale 52 an beispielsweise einen Verteilerknoten im Kabelnetzwerk überträgt.

Aus Kostengründen sind bei diesem Verstärker die Komponenten im Vor- als auch Rückweg an die Bandbreite der zu verarbeitenden Signale angepaßt.Dadurch sind dadurch auch die Grenzfrequenzen und damit die Durchlaßbereiche fest vorgegeben, so dass der Verstärker nur für eine ganz bestimmte Frequenzaufteilung einsetzbar ist.

Aufgabe der vorliegenden Erfindung ist es, einen Verstärker für Vor- und Rückwegsignale anzugeben, der an unterschiedliche Frequenzaufteilungen ohne großen technischen Aufwand anpaßbar ist.

Diese Aufgabe wird durch einen Verstärker mit den Merkmalen nach Anspruch 1 gelöst. Bevorzugte Ausgestaltungen des Verstärkers ergeben sich aus den abhängigen Ansprüchen.

Ein wesentlicher Gedanke der Erfindung besteht darin, die für die Verarbeitung von Vorwegsignalen vorgesehenen Komponenten eines Verstärkers zumindest teilweise auch für Rückwegsignale zu nutzen. Da die Vorwegsignale insbesondere in Kabelnetzwerken eine sehr viel größere Bandbreite als die Rückwegsignale aufweisen und zudem in höheren Frequenzbereichen liegen, sind die zur Verarbeitung von Vorwegsignalen vorgesehenen Komponenten entsprechend ausgelegt und prinzipiell auch für die Verarbeitung von Rückwegsignalen geeignet. Vor allem das Verstärkerelement für Vorwegsignale ist in der Regel ein breitbandiger Verstärker, der vorteilhaft ebenso für die Verstärkung der Rückwegsignale genutzt werden kann. Durch die Erfindung kann eine teuere Komponenten - nämlich das Verstärkerelement für Rückwegsignale - eingespart werden. Dadurch wird ein kostengünstigerer Verstärker geschaffen, der weniger Komponenten als herkömmliche Verstärker für Vor- und Rückwegsignale, bei gleicher Funktionalität, benötigt. Zudem ist der erfindungsgemäße Verstärker flexibel und einfacher an Änderungen der Frequenzbereiche, beispielsweise Bereichsveränderungen, anpassbar. Bei Bereichsveränderungen sind lediglich die Filter zu ändern, d.h. deren Übertragungsbereiche Grenzfrequenzen entsprechend der gewünschten Änderung anzupassen.

Konkret betrifft die Erfindung einen Verstärker, insbesondere für ein Kabelnetzwerk, für Vor- und Rückwegsignale, die in verschiedenen Frequenzbändern übertragen werden. Der Verstärker umfasst
- einen ersten und zweiten Anschluß,
- ein gemeinsames Verstärkerelement für Vorund Rückwegsignale,
- ein erstes und zweites Vorwegsignal-Filter, und
- ein erstes und zweites Rückwegsignal-Filter.

Ein Eingang des Verstärkerelements ist mit einem Ausgang des ersten Vorwegsignal-Filters und mit einem Ausgang des ersten Rückwegsignal-Filters, ein Ausgang des Verstärkerelements mit einem Eingang des zweiten Vorwegsignal-Filters und einem Eingang des zweiten Rückwegsignal-Filters, der erste Anschluß mit dem Ausgang des zweiten Rückwegsignal-Filters und dem Eingang des ersten Vorwegsignal-Filters, und der zweite Anschluß mit dem Ausgang des zweiten Vorwegsignal-Filters und dem Eingang des ersten Rückwegsignal-Filters verschaltet. Ein derartiger Verstärker kann vorteilhaft beispielsweise in bereits existierenden Kabelnetzwerken oder auch in neuen Kabelsystemen sowie in optischen Netzwerken eingesetzt werden.

Alternativ können die Vorwegsignal- und Rückwegsignal-Filter mindestens eine Serienschaltung und/oder Parallelschaltung einer Vielzahl von Filtern umfassen. Hierbei ist eine erste Vielzahl von Filtern der mindestens einen Serienschaltung und/oder Parallelschaltung für Vorwegsignale und eine zweite Vielzahl von Filtern der mindestens einen Serienschaltung für Rückwegsignale vorgesehen. Die Zuordnung der Signalrichtungen ist also nicht zwangsweise mit einem bestimmten Filtertyp verbunden. Im Prinzip sind für die Übertragung der Vor- und Rückwegsignale beliebige Zusammenschaltungen von Filtern möglich.

Das Verstärkerelement kann ein Breitbandverstärker sein. Dessen Verstärkungskennlinie sollte einen Frequenzbereich überstreichen, der die Frequenzbänder für Vorweg- und Rückwegsignale umfasst.

Zwischen den ersten Anschluß und den Ausgang des zweiten Rückwegsignal-Filters und den Eingang des ersten Vorwegsignal-Filters kann ein Equalizer geschaltet sein, der zur Anpassung an eine angeschlossene Übertragungsleitung, insbesondere ein Koaxialkabel dient.

Um zusätzliche Signalblöcke in den Rückweg einkoppeln zu können, kann zwischen den Eingang des Verstärkerelements und den Ausgang des ersten Rückwegsignal-Filters eine Signaleinkoppelanordnung vorgesehen sein.

Ferner kann zwischen den Eingang des Verstärkerelements und der Signalkoppelanordnung eine Signalpegel-Einstelleinrichtung geschaltet sein, die beispielsweise zum Einstellen der Pegel der Rückwegsignale dient.

Vorzugsweise verarbeitet der Verstärker elektrische Signale. Alternativ kann er auch optische Signale verarbeiten.

Eine bevorzugte Verwendung des erfindungsgemäßen Verstärkers betrifft ein Kabelnetzwerk. Ebenso vorteilhaft kann der erfindungsgemäße Verstärker in einem optischen Netzwerk verwendet werden.

Die Erfindung wird nachfolgend anhand eines Ausführungsbeispiels eines Verstärkers für Vor- und Rückwegsignale in Verbindung mit den Zeichnungen erläutert. Die Zeichnungen zeigen in
- Fig. 2: einen aus dem Stand der Technik bekannten Verstärker für Vor- und Rückwegsignale in einem Kabelnetzwerk, und in
- Fig. 1: ein Ausführungsbeispiel eines erfindungsgemäßen Verstärkers für Vor- und Rückwegsignale.

Zur Beschreibung von Fig. 2 wird auf die Beschreibungseinleitung verwiesen.

Der in Fig. 1 abgebildete Verstärker ist zum Einsatz in einem Kabelnetzwerk vorgesehen. Er weist einen ersten Anschluß 10 auf, der als Eingang für Vorwegsignale und Ausgang für Rückwegsignale dient. Der Anschluß 10 ist mit einem (nicht dargestellten) ersten Koaxialkabel verbunden, um Signale mit einem Verteilerknoten des Kabelnetzwerks austauschen zu können. Ein Equalizer 12 dient zum Linearisieren der Amplitudenantwort des Koaxialkabels über den gesamten, für die Übertragung von Vor- und Rückkwegsignalen, zur Verfügung stehenden Frequenzbereich.

Vorwegsignale werden vom Equalizer 12 über ein erstes Hochpaßfilter 28 dem Eingang eines Breitband-Vertärkerelements 16 zugeführt. Das erste Hochpaßfilter 28 filtert aus dem empfangen Signalspektrum die Vorwegsignale aus. Der Durchlaßbreich des ersten Hochpaßfilters 28 entspricht daher im wesentlichen dem Frequenzbereich für die Vorwegsignale.

Nach Verstärkung der Vorwegsignale durch das Breitband-Verstärkerelement 16 werden diese durch ein zweites Hochpaßfilter 18 gefiltert und an einem zweiten Anschluß 20 des Verstärkers zur Verfügung gestellt. Mit dem zweiten Anschluß 20 ist ein (nicht dargestelltes) zweites Koaxialkabel verbunden, das den Verstärker beispielsweise mit einem ans Kabelnetzwerk angeschlossenen Endgerät wie eine Set-Top-Box oder ein Kabelmodem oder mit einem Verteilerknoten oder einem weiteren Verstärker verbindet.

Der zweite Anschluß 20 dient somit als Ausgang für Vorwegsignale und Eingang für Rückwegsignale. Das über das zweite Koaxialkabel empfangene Signalspektrum wird demnach über den zweiten Anschluß 20 einem ersten Tiefpaßfilter 22 zugeführt. Dieses filtert die empfangenen Rückwegsignale und leitet sie einer Signaleinkoppelanordnung 24 zu.

Die Signaleinkoppelanordnung 24 dient zum Einkoppeln von zusätzlichen Signalen oder Signalblöcken in den Rückwegsignalfluß. Die der Signaleinkoppelanordnung 24 nachgeschaltete Signalpegel-Einstelleinrichtung 26 ist zum Beeinflussen der Pegel der Rückwegsignale vorgesehen. Vorzugsweise sind die über die Signaleinkoppelanordnung 24 einzukoppelnden Signale spektral konvertierte Signalblöcke, welche spektral vollständig die Rückwegsignale darstellen. Dadurch kann mittels entsprechender Rückkonvertierung in beispielsweise einer Kopfstation des Kabelnetzwerks der ursprüngliche Inhalt der zusätzlich eingekoppelten Signale zurück gewonnen werden.

Stellt man sich den Verstärker der Fig. 1 als Verteilpunkt in einem Kabelnetzwerk vor, so gelangen von einem Endgerät eines Teilnehmers kommende Rückwegsignale an diesen Verteilpunkt. Um gleich geartete Signale über die Signaleinkoppelanordnung 24 in den Rückwegsignalfluß einzukoppeln, ohne die vom Endgerät des Teilnehmers kommenden Rückwegsignale zu beeinflussen, müssen die einzukoppelnden Signale frequenzmäßig und/oder zeitlich verschoben werden. Dies kann in zusätzlichen Einrichtungen erfolgen, die nicht dargestellt sind. Die derart zeitlich und/oder frequenzmäßig verschobenen Signale werden dann über die Signaleinkoppelanordnung 24 in den Rückwegsignalfluß eingekoppelt, ohne die Rückwegsignale vom Endgerät des Teilnehmers zu beeinflussen. Mit der Signalpegel-Einstelleinrichtung 26 können unter anderem dann noch die Pegel der Rückwegsignale am Eingang des Verstärkerelements 16 beeinflußt werden.

Von der Signalpegel-Einstelleinrichtung 26 werden die Rückwegsignale an den Eingang des Breitband-Verstärkerelements 16 geführt, von diesem verstärkt und über ein zweites Tiefpaßfilter 14 dem Equalizer 12 zugeführt. Dieser verzerrt die zugeführten verstärkten Rückwegsignale vor und stellt sie am ersten Anschluß 10 zur Verfügung. Über das erste Koaxialkabel können dann die Rückwegsignale an beispielsweise einen (nicht dargestellten) Verteilerknoten oder eine (nicht dargestellte) Verstärkerstation übertragen werden.

### Bezugszeichen

- 10: 1. Anschluß
- 12: Equalizer
- 14: 2. Rückwegsignal-Filter (2. Tiefpaßfilter)
- 16: Verstärkerelement (Breitband-Verstärkerelement)
- 18: 2. Vorwegsignal-Filter (2. Hochpaßfilter)
- 20: 2. Anschluß
- 22: 1. Rückwegsignal-Filter (1. Tiefpaßfilter)
- 24: Signaleinkoppelanordnung
- 26: Signalpegel-Einstelleinrichtung
- 28: 1. Vorwegsignal-Filter (1. Hochpaßfilter)
- 50: Vorwegeingangssignale
- 52: Rückwegausgangssignale
- 54: 1. Hochpaßfilter
- 56: 2.Tiefpaßfilter
- 58: Downstream-Verstärkerelement
- 60: Upstream-Verstärkerelement
- 62: 2. Hochpaßfilter
- 64: 1. Tiefpaßfilter
- 66: Vorwegausgangssignale
- 68: Rückwegeingangssignale

## Patentansprüche

1. Verstärker, insbesondere für Vor- und Rückwegsignale, insbesondere für ein Kabelnetzwerk, wobei die Signale in verschiedenen Frequenzbändern übertragen werden, umfassend
- einen ersten und zweiten Anschluß (10, 20),
- ein gemeinsames Verstärkerelement (16) für Vor- und Rückwegsignale,
- ein erstes und zweites Vorwegsignal-Filter (18, 28),
- ein erstes und zweites Rückwegsignal-Filter (14, 22), wobei
ein Eingang des Verstärkerelements (16) mit einem Ausgang des ersten Vorwegsignal-Filters (28) und mit einem Ausgang des ersten Rückwegsignal-Filters (22),
ein Ausgang des Verstärkerelements (16) mit einem Eingang des zweiten Vorwegsignal-Filters (18) und einem Eingang des zweiten Rückwegsignal-Filters (14),
der erste Anschluß (10) mit dem Ausgang des zweiten Rückwegsignal-Filters (14) und dem Eingang des ersten Vorwegsignal-Filters (28), und
der zweite Anschluß (20) mit dem Ausgang des zweiten Vorwegsignal-Filters (18) und dem Eingang des ersten Rückwegsignal-Filters (22) verschaltet ist.

2. Verstärker nach Anspruch 1,
**dadurch gekennzeichnet, daß** die Vorwegsignal- und Rückwegsignal-Filter (14, 18, 22, 28) mindestens eine Serienschaltung und/oder Parallelschaltung einer Vielzahl von Filtern umfassen, wobei eine erste Vielzahl von Filtern der mindestens einen Serienschaltung und/oder Parallelschaltung für Vorwegsignale und eine zweite Vielzahl von Filtern der mindestens einen Serienschaltung und/oder Parallelschaltung für Rückwegsignale vorgesehen sind.

3. Verstärker nach einem der vorhergehenden Ansprüche,
**dadurch gekennzeichnet, daß**
das Verstärkerelement (16) ein Breitband-Verstärkerelement ist.

4. Verstärker nach einem der vorhergehenden Ansprüche,
**dadurch gekennzeichnet, daß** zwischen den ersten Anschluß (10) und den Ausgang des zweiten Rückwegsignal-Filters (14) und den Eingang des ersten Vorwegsignal-Filters (28) ein Equalizer (12) geschaltet ist.

5. Verstärker nach einem der vorhergehenden Ansprüche,
**dadurch gekennzeichnet, daß** zwischen den Eingang des Verstärkerelements (16) und den Ausgang des ersten Rückwegsignal-Filters (22) eine Signaleinkoppelanordnung (24) zum Einkoppeln von zusätzlichen Signalen in die Rückwegsignale vorgesehen ist.

6. Verstärker nach Anspruch 7,
**dadurch gekennzeichnet, daß** zwischen den Eingang des Verstärkerelements (16) und die Signaleinkoppelanordnung (24) eine Signalpegel-Einstelleinrichtung (26) geschaltet ist.

7. Verstärker nach einem der vorhergehenden Ansprüche,
**dadurch gekennzeichnet, daß** er elektrische Signale verarbeitet.

8. Verstärker nach Anspruch 8,
**dadurch gekennzeichnet, daß** er optische Signale verarbeitet.

9. Verwendung eines Verstärkers nach einem der Ansprüche 1 bis 7 in einem Kabelnetzwerk.

10. Verwendung eines Verstärkers nach einem der Ansprüche 1 bis 6 und 8 in einem optischen Netzwerk.
